# EUROPEAN PATENT APPLICATION

(11) **EP 1 169 958 A1**
(43) Date of publication of application: **09.01.2002**
(21) Application number: 00305420.2
(22) Date of filing: 28.06.2000
(51) Int. Cl.: A47J 37/12

(54) **Vending machine cooking unit**

(71) Applicant: Tege Patents Aktiengesellschaft, 9497 Triesenberg (LI)
(72) Inventor: Feierabend, Ivo, 9010 St. Gallen (CH); Torday, Robert, 1009 Pully (CH); Osborn, Anthony, Derby DE74 2NR (GB); Degli Esposti, Luigi, 10091 Alpignano, Torino (IT)
(74) Representative: Brunner, Michael John

(57) **Abstract**

A vending machine (1) for fried potato product, has a cooking vessel (6) into which a shaped potato product and cooking oil can be controllably introduced and from which a cooked potato product can be automatically removed in operation. It also includes a filter (11) for filtering used cooking oil and a filtered cooking oil reservoir (10) from which filtered cooking oil can be selectively re-introduced into the cooking vessel. An air dehumidifying and treatment device (12) is provided for removing moisture from air around the cooking vessel and from which water can be passed through a collection outlet. To simplify improve the efficiency of the air dehumidifying and treatment by reducing the volume of air which has to be treated, and to improve access for servicing the cooking vessel (6), oil reservoir (10), filter (11) and air dehumidifying and treatment device (12) are disposed in a removable unit (5) having a housing (4) from which the cooked product and the water are removed in use.

## Description

The present invention relates to vending machines and, more particularly to vending machines of the type described in our earlier patent applications, see for example EP-A-0885583 and EP-A-0885584, namely vending machines for dispensing a cooked potato product in the form of french fries or potato chips.

A difficulty with existing versions of such machines is that of servicing. Because of the number and complexity of the parts and given that there is a continual flow of cooking materials, including potato powder and water, and also cooking oil and waste water condensed from the rehydrated powder during cooking, regular servicing is important to ensure that problems do not occur and that a consistently high quality product is obtained. However, this involves accessing the internal parts of the vending machine and, as there are numerous different components, this is both awkward and time consuming. Furthermore, because of the internal complexity and numbers of parts, it can be relatively easy for a service engineer to miss out the servicing of a component if he or she is distracted during the servicing process. It is desirable to design such machines therefore to minimise such difficulties.

Furthermore, space inside the cabinet of such vending machines is limited and it also desirable to reduce the amount of space occupied by the components of such vending machines to make it easier to install the components and also to improve access for servicing or repair.

Additionally, the cooking process results in cooking smells which it is desirable to prevent from reaching the outside and a dehumidifying and air conditioning system is necessarily fitted into the cabinet (see for example our EP-A-0885583). It is desirable to make such air conditioning systems as effective as possible and the conventional layout of the components in such a vending machine is a hindrance to this.

According to the present invention there is provided a vending machine for fried potato product, comprising
a cooking vessel into which a shaped potato product and cooking oil can be controllably introduced and from which a cooked potato product can be automatically removed in operation;
a filter for filtering used cooking oil;
a filtered cooking oil reservoir from which filtered cooking oil can be selectively re-introduced into the cooking vessel; and
an air dehumidifying and treatment device for removing moisture from air around the cooking vessel and from which water can be passed through a collection outlet; characterised by
a removable unit having a housing in which said cooking vessel, oil reservoir, oil filter and air dehumidifying and treatment device are disposed and from which said cooked product and said water are removed in use.

By locating the cooking vessel, oil reservoir, filter and air dehumidifying and treatment device within the removable housing, a number of advantages arise. Firstly, the volume of air which has to be treated to remove cooking smells is greatly reduced as there is a much smaller volume of air within the removable unit than within the machine cabinet. This improves the efficiency of the air dehumidifying and treatment device and also means that its air-handling capacity can be significantly reduced, creating manufacturing cost savings as well as reducing the required size of the device. Secondly, the unit can be partially or fully withdrawn during servicing, greatly improving access to the components which require servicing and reducing the time taken for servicing. This in turn reduces 'downtime', ie time when the vending machine is out of operation, and, of course, reduces servicing costs. Thirdly, in the event of major failure of a component, a replacement unit can be simply and quickly installed again reducing downtime and allowing the faulty unit to be taken back to a service centre for examination and repair, again leading to a reduction in running/servicing costs.

Preferably, the cooking vessel, oil reservoir, filter and air dehumidifying and treatment device are independently mounted within the removable unit which therefore acts as a support for these components, leading to a further advantage, namely a reduction in number of frame or support components within the cabinet.

Additionally, the vending machine comprises a rehydration and extrusion unit (see our EP-A-0885584) for forming the potato powder into the desired shape for cooking and extruding the shaped potato product into the cooking vessel. The removable housing may support this unit externally directly, allowing it too to be removed at the same time as the other components mentioned and also removing the need for suport frame components for the rehydration and extrusion unit.

One example of a vending machine according to the present invention will now be described with reference to the accompanying drawings, in which:-
Figure 1 is a front view of the interior of the vending machine;

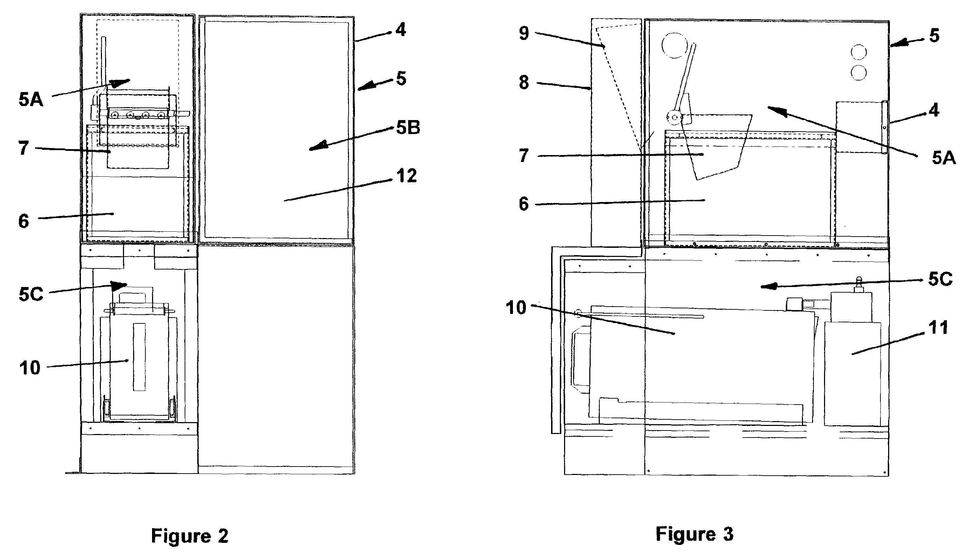

Figure 2 is a front view of a removable unit and housing; and
Figure 3 is a sectional side view of the removable unit and housing.

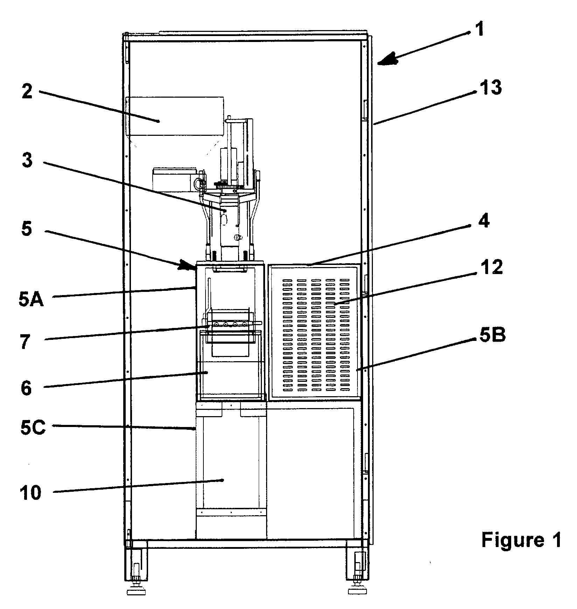

Figure 1 shows the interior of the vending machine 1, having a storage hopper 2 in which powdered potato is stored prior to use, the powdered potato being fed selectively, as described for example in our EP-A-0885584, into a rehydration and extrusion unit 3. This latter unit is mounted on the top of a housing 4 of a removable unit 5 which is slidably removable forwardly on rails (not shown) and normally being locked in position by suitable quick-release fasteners or the like.

The removable unit 5 has three compartments 5A,5B,5C which may be formed either from separate housings fixed and sealed together in communication with one another or as a single-piece housing with appropriate internal walls. The compartment 5A houses a cooking vessel 6 in which cooking oil is heated by a submerged electrical heating element (not shown) and in which is pivotally arranged a cooking basket 7. In use, once a user has inserted payment into a coin handling mechanism (mounted on the door of the cabinet usually and not therefore shown), powder and water are dispensed into the rehydration and extrusion unit 3 and then the rehydrated potato product is extruded though an aperture (not shown) in the top housing 4 in use, directly into the oil in the cooking basket 7. Once cooking is complete, the basket is pivotally upwardly and forwardly lifted to dispense the cooked product into a dispensing chute 8 through a hinged flap 9, from where it falls into a cup (not shown) disposed at the bottom of the chute behind a door (not shown) which is automatically opened or released to allow the user to retrieve the cooked potato product.

An air dehumidifying and treatment device 12 is located in the compartment 5B for removing moisture from air around the cooking vessel 6 and from which water can be passed through a collection outlet (not shown) to a collecting reservoir (not shown) located in the cabinet 13 of the vending machine 1. The air dehumidifying and treatment device 12 treats the air around the cooking vessel to remove water vapour resulting from the cooking of the rehydrated powder and at the same time removes volatile cooking vapours which otherwise create unpleasant cooking smells in the vicinity of the machine.

A filter 11 for filtering used cooking oil is also disposed in the housing 4 within the compartment 5C, which also contains a reservoir 10 for the filtered cooking oil and from which filtered cooking oil can be selectively and automatically re-introduced into the cooking vessel 6 as required during operation of the machine.

A door or doors (not shown) may be provided on the front of the compartments, but preferably only on the front of the compartments 5A and 5C. A single door may close both compartments.

By disposing the various components of the cooking process within the compartments 5A,5B,5C in the housing 4 of the removable unit 5, the volume of air which has to be treated by the air dehumidifying and treatment device 12 is significantly less than that of prior designs (see for example EP-A-0885583), in which the air circulates almost freely within the cabinet 13. This allows optimisation of the air dehumidifying and treatment device 12 both from an operational and a cost point of view.

Disposing the various components on or in the housing 4 also allows for easy access for a service engineer either for regular servicing or repair. Certain components may be designed for easy and quick removal from their associated compartment, such as, for example, the cooking vessel 6, the basket 7, the filtered cooking oil reservoir 10 and the filters 11.

The space to the bottom righthand side (as seen in Figure 1) may be used to house a reservoir for water condensed out of the dehumidifying system and/or a reservoir for fresh water to be supplied to the rehydration unit 3, neither being shown in the figure.

The vending machine also includes a pump (not shown) for pumping cooking oil into the cooking vessel 6 and a reservoir (not shown) for fresh cooking oil. Either of these components may, if desired, be positioned inside the housing 4.

## Claims

1. A vending machine (1) for fried potato product, comprising
a cooking vessel (6) into which a shaped potato product and cooking oil can be controllably introduced and from which a cooked potato product can be automatically removed in operation;
a filter (11) for filtering used cooking oil;
a filtered cooking oil reservoir (10) from which filtered cooking oil can be selectively re-introduced into the cooking vessel; and
an air dehumidifying and treatment device (12) for removing moisture from air around the cooking vessel and from which water can be passed through a collection outlet; **characterised by**
a removable unit (5) having a housing (4) in which said cooking vessel, oil reservoir, filter and air dehumidifying and treatment device are disposed and from which said cooked product and said water are removed in use.

2. A vending machine according to claim 1, wherein the cooking vessel (6), filtered oil reservoir (10), filter (11) and air dehumidifying and treatment device (12) are independently mounted within the removable unit (5).

3. A vending machine according to claim 1 or claim 2, further including a rehydration and extrusion unit (3) for forming the potato powder into the desired shape for cooking and for extruding the shaped potato product into the cooking vessel (6), the rehydration and extrusion unit being mounted directly on to the exterior of the removable unit (5).

4. A vending machine according to any of claims 1 to 3, wherein the removable unit (5) is mounted on rails to allow it to be withdrawn through the front of the machine.

5. A vending machine according to any of claims 1 to 4, further comprising an oil pump disposed within the housing of the removable unit.

6. A vending machine according to any of claims 1 to 5, further comprising a fresh oil reservoir disposed within the housing of the removable unit.

7. A vending machine according to any of claims 1 to 6, including a plurality of compartments (5A,5B,5C) within the housing of the removable unit.

8. A vending machine according to claim 7, wherein the compartments (5A,5B,5C) individually house, respectively, the cooking vessel (6), the air dehumidifying and treatment device (12), and the oil filter (11) and filtered oil reservoir (10).

9. A vending machine according to claim 8, wherein at least the compartments (5A,5C) housing the cooking vessel (6), the oil filter (11) and the filtered oil reservoir (10) have a door or doors closing the compartments.
